# EUROPEAN PATENT APPLICATION

(11) **EP 4 632 362 A1**
(43) Date of publication of application: **15.10.2025**
(21) Application number: 24169094.0
(22) Date of filing: 08.04.2024
(51) Int. Cl.: G01N 23/20

(54) **A SAMPLE HANDLING APPARATUS**

(71) Applicant: Malvern Panalytical B.V., 7602 EA Almelo (NL)
(72) Inventor: Buwalda, Klara, 7602 EA Almelo (NL); Otten, Gerco, 7602 EA Almelo (NL); Vertegaal, Henk, 7602 EA Almelo (NL)
(74) Representative: Elkington and Fife LLP

(57) **Abstract**

The invention provides a sample handling apparatus for transporting a sample holder. The sample handling apparatus comprises a frame, a sample holder having an engagement member, a transport head mounted to the frame, and an actuator arrangement configured to move the transport head on the frame. The transport head comprises a holding arrangement. The holding arrangement includes a first engagement arm for engaging the sample holder. The engagement arm is shaped to co-operate with the engagement member of the sample holder to hold the sample holder.

## Description

### FIELD OF THE INVENTION

The invention relates to a sample handling apparatus for holding and transporting a sample holder - in particular, an X-ray analysis sample holder - and to a method of using the sample handling apparatus.

### BACKGROUND OF THE INVENTION

X-ray analysis systems are used to characterize samples (i.e., materials to be analysed) using analytical techniques such as X-ray fluorescence (XRF) and X-ray diffraction (XRD). X-ray analysis is generally conducted by placing a sample on a sample support, in an X-ray analysis instrument, where the sample is irradiated with X-rays. It may be convenient to contain the sample in a sample holder during the X-ray analysis. For example, some samples are prepared as a powder or a fluid and can be more conveniently handled when they are contained in a sample holder. The sample is typically prepared and then placed in the sample holder before loading the sample holder onto the sample support. Some X-ray analysis systems include a sample changing system for loading sample holders containing X-ray analysis samples onto the sample support for analysis and unloading the sample holders from the sample support.

In some X-ray analysis systems comprising sample changing systems, the sample changing system provides automatic loading and unloading of the sample holders. During loading and unloading, the sample holder is gripped by a gripping device for holding and transporting the sample holder, such as a robotic hand. The gripping device comprises a plurality of gripping elements which are electronically actuated to move the gripping elements towards each other and thereby hold the sample holder between at least two of the gripping elements.

To carry out X-ray analysis reliably and efficiently, samples should be held and transported in stable manner. It would be desirable to provide a sample handling apparatus that is capable of facilitating reliable and efficient X-ray analysis.

### SUMMARY OF THE INVENTION

The invention is defined by the claims.

According to examples in accordance with an aspect of the invention, there is provided a sample handling apparatus for transporting a sample holder. The sample handling apparatus comprises a frame, a sample holder having an engagement member, a transport head mounted to the frame, and an actuator arrangement configured to move the transport head on the frame. The transport head comprises a holding arrangement. The holding arrangement includes a first engagement arm for engaging the sample holder. The engagement arm is shaped to co-operate with the engagement member of the sample holder to hold the sample holder.

The sample handling apparatus may be an X-ray analysis sample handling apparatus, such as an X-ray fluorescence (XRF) analysis and/or an X-ray diffraction (XRD) analysis sample handling apparatus. In this regard, the sample handling apparatus may transport an X-ray analysis sample holder (such as an XRF sample holder or an XRD sample holder) to an X-ray analysis instrument for X-ray analysis of the sample held in the sample holder. In other embodiments the sample handling apparatus may form part of an X-ray analysis instrument, and transport the sample holder to a location ready for X-ray analysis.

The first engagement arm is shaped to mechanically engage with the engagement member to hold the sample holder. In this way, the first engagement arm and the engagement member co-operate to enable the transport head to hold the sample holder. By providing an arrangement in which the first engagement arm is shaped to co-operate with the engagement member to hold the sample holder via mechanical engagement of the first engagement arm and the engagement member, the transport head is capable of holding and transporting the sample holder without the use of moving gripping parts. When moving gripping parts are used, the gripping parts are typically electronically actuated to move towards each other and thereby hold the sample holder between at least two of the gripping parts. However, if power is lost, the gripping parts may no longer be powered to be in the gripping position, which may lead to the sample holder being dropped and, depending on the type of sample, the sample being dispersed throughout the instrument or other location resulting in a mess that is difficult to clean or potentially causing damage to the instrument. In contrast, the sample handling apparatus of the present invention can use passive mechanical engagement/co-operation (for example, based on the force of gravity) between the first engagement arm of the holding arrangement and the engagement member of the sample holder - meaning that, if power is lost, the holding arrangement of the sample handling appratus will continue to hold the sample holder. In this way, a sample handling apparatus according to an example of the present disclosure may provide (or may help to provide) fail-safe handling of samples.

In some embodiments, in the engaged configuration the first engagement arm and the engagement member are mechanically engaged such that the holding arrangement holds the sample holder, and the sample handling apparatus may further comprise a disengaged configuration in which the first engagement arm and the engagement member are disengaged, wherein the holding arrangement is configured such that the position of the first engagement arm relative to the transport head is the same in the engaged configuration and the disengaged configuration.

The holding arrangement may further comprise a second engagement arm shaped to co-operate with the engagement member such that, in the engaged configuration, the first engagement arm and the second engagement arm hold the sample holder.

The first and second engagement arms are shaped to engage the engagement member of the sample holder to hold the sample holder.

The first and second engagement arms may be arranged to engage opposing portions of the sample holder. Providing opposing engagement arms may improve the stability with which the sample holder is held by the transport head. It will be appreciated by those skilled in the art that more than two engagement arms may be provided, so long as there is sufficient space to allow the sample holder to pass between the engagement arms (i.e. without the engagement arms changing position).

In one embodiment, the holding arrangement may further comprise a second engagement arm for engaging the sample holder, wherein the second engagement arm is shaped to co-operate with the engagement member such that, in the engaged configuration, the first engagement arm and the second engagement arm hold the sample holder; and the sample handling apparatus may further comprise a disengaged configuration in which the first engagement arm and the second engagement arm are disengaged from the engagement member, wherein the position of the first engagement arm relative to the second engagement arm is the same in the engaged configuration and the disengaged configuration.

Keeping the relative position of the first and second engagement arms the same in both the engaged and disengaged configurations allows for the passive mechanical engagement/co-operation between the engagement arms of the holding arrangement and the engagement member of the sample holder meaning that if power is lost, the holding arrangement of the sample handling appratus will continue to hold the sample holder.

In some embodiments, the first engagement arm and the second engagement arm may be shaped to define a tapered channel for receiving the sample holder. The tapered channel may allow for a different size and/or shape engagement member and/or sample holder to be accommodated therebetween.

In some embodiments, the engagement member may comprise a flange and each of the first engagement arm and the second engagement arm may comprise a respective projecting portion for engaging with the flange. Using a projecting portion, such as a hook, to hold the sample holder can help to provide secure attachment of the sample holder to the transport head.

In some embodiments, the transport head may be coupled to the frame such that the transport head is movable with respect to the frame along a first axis and a second axis substantially orthogonal to the first axis. And, preferably, the holding arrangement may be movable along a third axis substantially orthogonal to the first axis and the second axis. Such movement allows the sample handling apparatus to retrieve sample holders from a variety of locations within the moveable reach of the transport head.

In some embodiments, the sample handling apparatus may further comprise a sample holder tray for holding a plurality of sample holders. The sample holder tray may, itself, be formed by a plurality of trays, some of which may be independently moveable (e.g. one or more sample tray caddies that can be removed from the sample handling apparatus to allow placement/retrieval of sample holders therefrom away from the sample handling apparatus) and a shelf may be provided to place the one or more sample holder trays thereon.

In some embodiments, the sample handling apparatus may further comprise a suction tool for holding a sample. The suction tool may comprise a coupling arrangement, for attaching the suction tool to the transport head, and a suction arrangement comprising a sample engaging member, for applying a suction force to the sample to hold the sample.

The suction tool can be conveniently attached to the transport head (e.g., via the holding arrangement) to provide additional functionality. In particular, the suction tool can facilitate the direct transport of a sample that is not typically held in a sample holder - such as glass bead samples, as used in XRF analysis. The coupling arrangement can facilitate the simple attachment of the suction tool to the transport head when and as needed, thereby allowing detachment of the suction tool when it is not needed.

The coupling arrangement of the suction tool may comprise a magnetic attachment member. The coupling arrangement may comprise one or more magnets (i.e., permanent magnetics) and/or one or more magnetic contacts comprising ferromagnetic material.

In embodiments comprising a suction tool, the sample handling apparatus may further comprise a dock for holding the suction tool. The suction tool may comprise a tool location member and the dock may comprise a dock location member. The tool location member and the dock location member may be configured to co-operate with one another to locate the suction tool with respect to the dock.

The dock is arranged to hold the suction tool while it is decoupled from the transport head, facilitating convenient attachment/detachment of the suction tool from the transport head.

The tool location member and the dock location member facilitate accurate placement of the suction tool in the dock, thereby facilitating easy and accurate attachment of the suction tool to the transport head. The tool location member and the dock location member may form a magnetic location arrangement. The magnetic location arrangement may comprise one or more permanent magnetics and one or more ferromagnetic contacts.

The transport head may be operable to move the suction tool, along the frame, between a docked configuration and an un-docked configuration, wherein in the docked configuration the suction tool is held by the dock. Optionally, the dock may further comprise a detachment member arranged to interrupt movement of the suction tool from the docked configuration to decouple to the suction tool from the transport head.

The sample handling apparatus, particularly the suction tool, is in the docked configuration when the suction tool is held in the dock. The sample handling apparatus, particularly the suction tool, is in an un-docked configuration when the suction tool is not held in the dock (i.e. it is held by the transport head).

According to a second aspect, a sample handling apparatus for transporting a sample holder is disclosed. The sample handling apparatus comprises a frame, a transport head mounted to the frame, and an actuator arrangement configured to move the transport head on the frame. The transport head comprises a holding arrangement comprising a first engagement arm for engaging the sample holder and a second engagement arm for engaging the sample holder. The first engagement arm and the second engagement arm are shaped to co-operate with an engagement member of the sample holder such that, in an engaged configuration, the first engagement arm and the second engagement arm hold the sample holder. The sample handling apparatus further comprises a disengaged configuration in which the first engagement arm and the second engagement arm are disengaged from the engagement member. The position of the first engagement arm relative to the second engagement arm is the same in the engaged configuration and the disengaged configuration.

The sample handling apparatus according to the second aspect may be otherwise as disclosed in the first aspect. Accordingly, any of the features summarized above for the first aspect may be combined with the second aspect.

Also disclosed is an X-ray analysis system (or instrument) comprising a sample handling apparatus as summarized above (according to either the first or second aspect). The X-ray analysis system (or instrument) may be configured to perform X-ray analysis on a sample in a sample holder. The X-ray analysis may comprise XRD and/or XRF.

According to a third aspect, a method of using the sample handling apparatus disclosed in the first or second aspects is also disclosed. The method may form part of a method of X-ray analysis (or may precede or follow a method of X-ray analysis), the X-ray analysis optionally comprising XRD and/or XRF. The method comprises moving the transport head on the frame to position the transport head with respect to the sample holder, bringing the first engagement arm into engagement with the engagement member, to attach the sample holder to the first engagement arm, and moving the transport head on the frame, with the sample holder attached to the first engagement arm. The position of the first engagement arm is maintained during the steps of moving the transport head and bringing the first engagement arm into engagement with the engagement member.

The first engagement arm is capable of co-operating with the engagement member to hold the sample, without the need for a change of its configuration. By providing this arrangement, the transport head is capable of gripping and transporting the sample holder without changing the configuration of the transport head (i.e., the first engagement arm can grip/hold the sample holder without the use of moving gripping parts).

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 illustrates a sample handling apparatus according to one or more embodiments of the invention;
Figure 2 illustrates a top-down view of the sample handling apparatus of figure 1, including a sample tray;
Figure 3 illustrates a perspective view of a transport head of the sample handling apparatus of figure 1;
Figure 4 is a schematic diagram showing a cross-sectional view of a holding arrangement according to another embodiment of the invention;
Figure 5A illustrates the holding arrangement of the sample handling apparatus of Figure 3;
Figure 5B illustrates a partial view of a transport head according to one or more embodiments of the invention holding a sample holder;
Figure 6A illustrates a perspective view of a suction tool according to one or more embodiments of the invention;
Figure 6B illustrates another perspective view of the suction tool of Figure 6A;
Figure 7 illustrates a dock in accordance with one or more embodiments of the invention;
Figure 8 illustrates a sample holder according to one or more embodiments of the invention; and
Figure 9 is a flow diagram illustrating a method in accordance with embodiments of the invention.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a sample handling apparatus for transporting a sample holder. The sample handling apparatus comprises a sample holder, a frame and a transport head movably mounted to the frame. The transport head comprises a holding arrangement for engaging the sample holder. An actuator arrangement is configured to move the transport head on the frame. The sample holder comprises an engagement member for engaging with the holding arrangement. In particular, the holding arrangement comprises a first engagement arm shaped to co-operate with the engagement member such that, in an engaged configuration, the first engagement arm holds the sample holder. The shape of the first engagement arm complements the shape of the sample holder (particularly the engagement member of the sample holder), allowing the first engagement arm to mechanically engage the sample holder (via the sample holder's engagement member) to hold and transport the sample holder. By providing this arrangement, reliable and efficient X-ray analysis is facilitated. In particular, the above-described sample handling apparatus avoids the need for a complex mechanical structure comprising moving parts and is accordingly less likely to suffer from failure. Additionally, no electronic actuation of the holding arrangement (other than positioning thereof) is required in order to hold the sample holder. Devices requiring electronic actuation are vulnerable to e.g., power outages. A gripping device comprising gripping elements that are electronically actuated to grip the sample holder will, in the event of a power outage, no longer be actuated to grip the sample holder causing the gripping device to drop the sample holder. The sample handling apparatus disclosed herein can help to provide relatively reliable and efficient X-ray analysis, in particular compared to e.g., a device requiring electronic actuation to grip the sample holder.

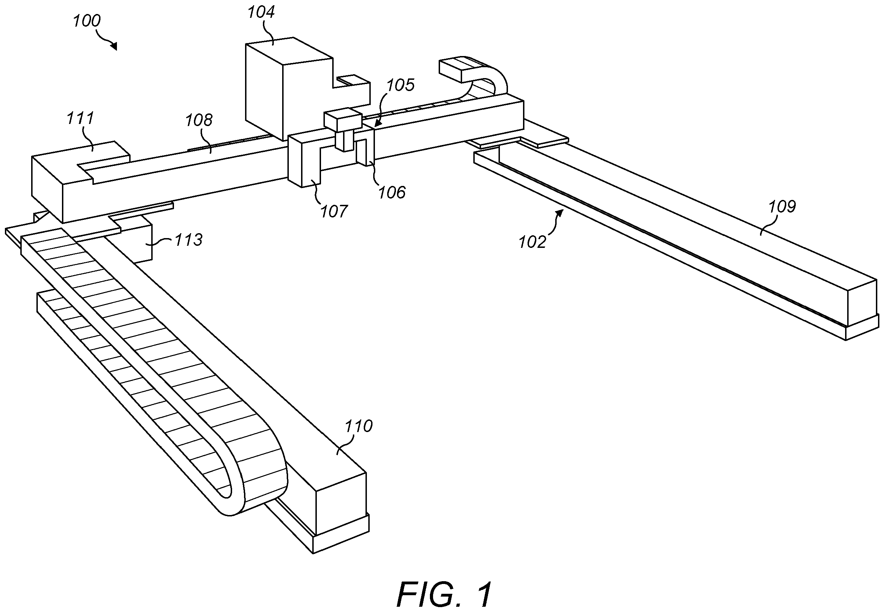

Figure 1 illustrates a sample handling apparatus 100, for transporting a sample holder, according to an embodiment of the invention. The sample handling apparatus comprises a frame 102 and a transport head 104 mounted to the frame 102. The transport head 104 is movably mounted to the frame 102 such that it can move relative to the frame 102, whilst remaining attached to the frame 102.

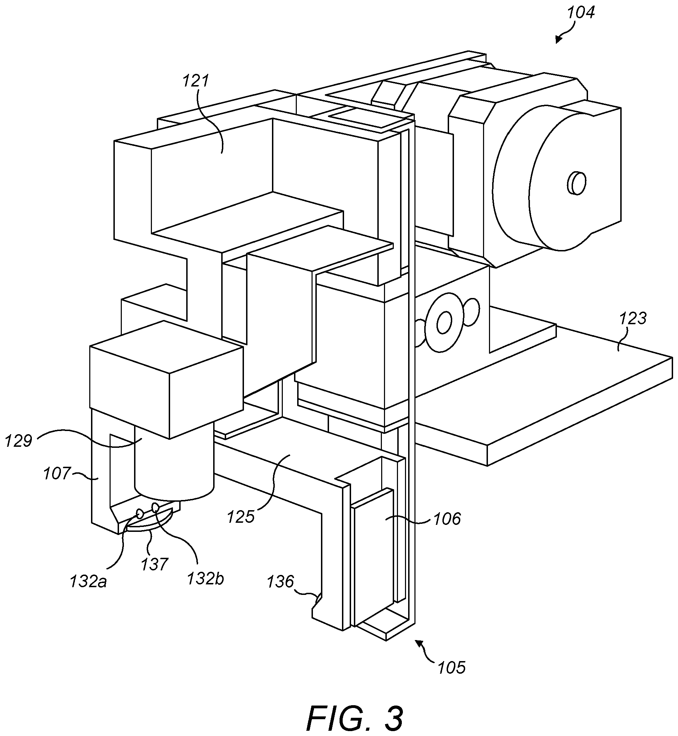

The transport head 104 comprises a holding arrangement 105 for holding a sample holder (not shown). The holding arrangement 105 comprises a rigid, square arch, comprising a base and two opposing arms - a first engagement arm 106 and a second engagement arm 107 - extending from the base. Each of the first engagement arm 106 and the second engagement arm 107 comprises a recessed portion that is shaped to complement the shape of the sample holder. The holding arrangement 105 is shown in more detail in figure 3.

In use, in order to pick up the sample holder, the transport head 104 is moved to position the holding arrangement 105 with respect to the sample holder such that the recessed portions of the first engagement arm 106 and the second engagement arm 107 can be brought into engagement with the sample holder (e.g., the recessed portions are positioned around/under a rim of the sample holder). When the first engagement arm 106 and the second engagement arm 107 are brought into engagement with the sample holder (i.e., when the sample handling apparatus is in an "engaged configuration") the sample holder is held between the first engagement arm 106 and the second engagement arm 107. The first engagement arm 106 and the second engagement arm 107 remain fixed in position relative to one another. That is, no movement of the first engagement arm 106 relative to the second engagement arm 107 is needed to pick up the sample holder. The first engagement arm 106 and the second engagement arm 107 remain in the same position relative to one another when holding the sample holder (i.e., the sample handling apparatus is in an "engaged configuration") and when free of the sample holder (i.e., the sample handling apparatus is in a "disengaged configuration").

The frame 102 comprises three support beams. The first support beam 108 extends along a first dimension ("the X-axis"). The second support beam 109 and the third support beam 110 extend parallel to a second dimension ("the Y-axis") that is perpendicular to the first dimension. The transport head 104 is mounted to the first support beam 108, such that it is movable along the X-axis. The first support beam 108 is mounted to the second support beam 109 and the third support beam 110 so that it can be moved along the second support beam 109 and the third support beam 110 to change the position of the transport head along the Y-axis.

The holding arrangement 105 is movably coupled to the transport head 104 such that the holding arrangement 105 can move with respect to the transport head 104 along a third dimension ("the Z-direction") substantially perpendicular to the first dimension and the second dimension. Accordingly, when the sample holder is held by the holding arrangement 105, the sample handling apparatus 100 can be used to move the sample holder in three dimensions.

The sample handling apparatus 100 comprises an actuator arrangement configured to move the transport head on the frame 102. In the embodiment illustrated in figure 1, the actuator arrangement comprises a first stepper motor 113 that is coupled to the third support beam 110 and operable to move the first support beam 108 along the Y-axis and a second stepper motor 111 that is coupled to the transport head 104 and is operable to move the transport head 104 along the X-axis.

In use, one or more sample trays (not shown in figure 1) for supporting a plurality of samples (such as via sample holders, or directly the samples themselves) can be positioned inside the area partially enclosed by the frame 102. By repositioning the transport head 104 on the frame 102, it is possible to pick up samples/sample holders from different locations on the sample tray(s).

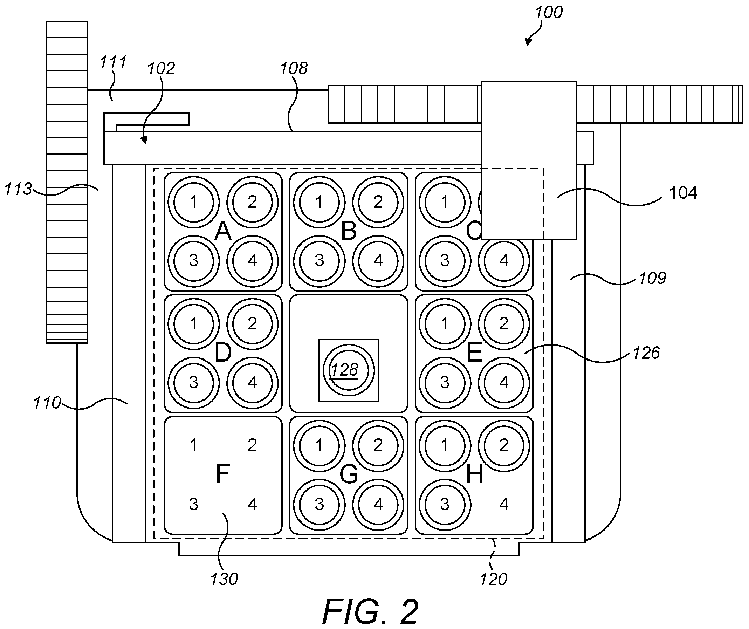

Figure 2 illustrates a top-down view of the sample handling apparatus 100 of figure 1, including a sample tray 120 (the area bounded by the frame 102, denoted by the dashed lines). By moving the transport head along the frame 102, the position of the transport head 104 with respect to the sample tray 120 can be changed such that, it is possible to select a sample holder from any location on the sample tray 120 and transport it to another location. The sample tray 120 may comprise a plurality of regions (denoted A-H), including a sample holder tray caddy 126 for holding sample holders and a direct loading sample tray 130 for holding samples to be directly loaded into the X-ray analysis instrument (i.e., samples not held in sample holders). The sample holder tray caddy 126 comprises a plurality of recesses for receiving one or more sample holders, and may comprise a small handle (such as a centrally located handle) to allow a user to easily place and/or lift the caddy 126 from the sample tray 120, to allow sample holders to be easily loaded ready for analysis and easily unloaded after analysis. Similarly, direct loading sample tray 130 may also comprise a handle to allow it to be removed from the sample handling apparatus. Whilst each of the sample holder tray caddy 126 and direct loading sample tray 130 are shown having four positions, it will be appreciated that any appropriate configuration could be used, and for example, the direct loading sample tray 130 may have additional positions for samples as the direct samples may have a smaller configuration than those in sample holders.

Figure 2 also depicts a central region 128. In this particular embodiment, of an X-ray analysis instrument, the central region 128 may be where the sample/sample holder is positioned for analysis, although it will be appreciated that other configurations are also possible, such as the sample being placed in an intermediary position and then moved into an analysis position that is located outside of the frame.

Figure 3 illustrates a perspective view of the transport head 104 of the sample handling apparatus 100 of figure 1. The transport head 104 comprises a main body 121 comprising a mounting portion 123 for mounting the transport head to the frame 102 (as shown in figure 1). The holding arrangement 105 is movably coupled to the main body 121 to allow movement of the holding arrangement 105 along the Z-direction with respect to the main body 121. A camera 129 is also shown mounted to the holding arrangement 105, which may be used to e.g. identify the sample/sample holder.

The holding arrangement 105 comprises a base 125 with the first engagement arm 106 and the second engagement arm 107 extending from the base 125 along the Z-dimension. Each of the first engagement arm 106 and the second engagement arm 107 comprises a respective recessed portion 136, 137. The recessed portions 136, 137 are shaped to complement the shape of the sample holder, such that when the sample holder sits in between the first engagement arm 106 and the second engagement arm 107 the sample holder is held by the holding arrangement.

In use, the sample holder is picked up by the transport head 104 by positioning the holding arrangement 105 relative to the sample holder such that the recessed portions of the first engagement arm 106 and the second engagement arm 107 are brought into engagement with a corresponding engagement portion of the sample holder. The engagement portion corresponds to the first and second engagement arms in the sense that it has a shape that complements the shapes of the recessed portions. For example, in some embodiments, the sample holder may be tubular, with one closed end and one open end. The engagement portion may be provided by a rim of the open end of the sample holder, and the recessed portions of the first engagement arm 106 and the second engagement arm 107 may be shaped to receive at least a portion of the rim.

The holding arrangement 105 may further comprise one or more detection sensors 132 (two such sensors 132a, 132b are shown in this embodiment) arranged to detect the presence and/or absence of a sample holder between the first engagement arm 106 and the second engagement arm 107. Each detection sensor 132 comprises an optical transmitter, positioned on one of the first engagement arm 106 and the second engagement arm 107 and a receiver positioned on the other of the first engagement arm 106 and the second engagement arm 107. The receiver is arranged to receive light transmitted by the optical transmitter. When the sample handling apparatus is in the engaged configuration (i.e., the sample handling apparatus is holding a sample holder between the first engagement arm 106 and the second engagement arm 107) the light transmitted by the optical transmitter is attenuated/prevented from reaching the receiver, indicating that the sample holder is present. When the sample handling apparatus is in the disengaged configuration (i.e., it is not holding a sample holder between the first engagement arm 106 and the second engagement arm 107) the light transmitted by the optical transmitter is free to reach the receiver, indicating that the sample holder is absent.

It will be appreciated that, in some embodiments of the sample handling apparatus, the holding arrangement 105 may have a different structure to that shown in figure 3. In particular, the first engagement arm 106 and/or the second engagement arm 107 may be shaped differently to those shown in figure 3. The skilled person will appreciate that any shape can be used, so long as it corresponds to the shape of the sample holder to allow the holding arrangement to hold the sample holder (e.g., between the first engagement arm and the second engagement arm). For example, the first engagement arm 106 and/or the second engagement arm 107 may not comprise recesses for receiving the sample holder. In some embodiments the first engagement arm 106 and the second engagement arm 107 may be shaped to define a tapered channel for holding the sample holder. In some other embodiments, the first engagement arm 106 and/or the second engagement arm 107 may comprise a projecting portion for engaging with the engagement portion of the sample holder. For example, the sample holder may comprise a rim and the projecting portion(s) may be shaped to hook under the rim of the sample holder.

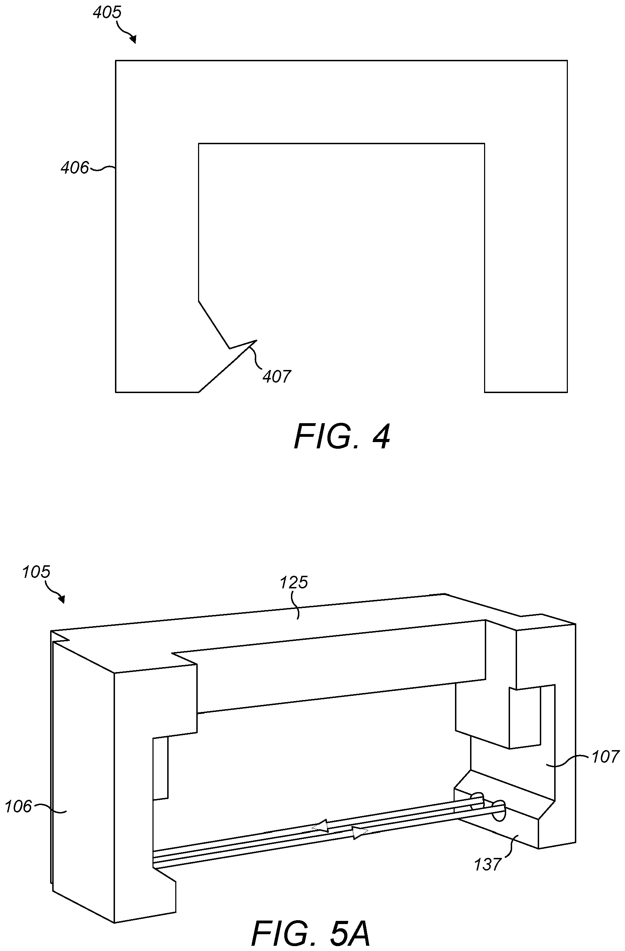

Figure 4 illustrates a cross-sectional view of a holding arrangement 405 according to one or more embodiments of the sample handling apparatus. The holding arrangement 405 comprises a single engagement arm 406 shaped to engage with the sample holder. The engagement arm 405 comprises a projecting portion, shown in this embodiment in the form of a hook 407 for engaging with the sample holder to hold the sample holder. For example, the engagement member of the sample holder may comprise a rim with a plurality of detents or a groove, and the hooked portion 407 may engage with said detent or groove.

Figure 5A illustrates the holding arrangement 105 of the sample handling apparatus 100 of figure 3. The holding arrangement 105 comprises a square arch comprising a base 125 and two opposing engagement arms (the first engagement arm 106 and the second engagement arm 107) extending downwardly from the base 125. Each of the first and second engagement arms 106, 107 comprises a recess. The recess comprises a curved upper wall portion and a lower wall portion disposed at an angle to the upper wall portion (e.g., the upper wall portion and the lower wall portion are substantially perpendicular to one another).

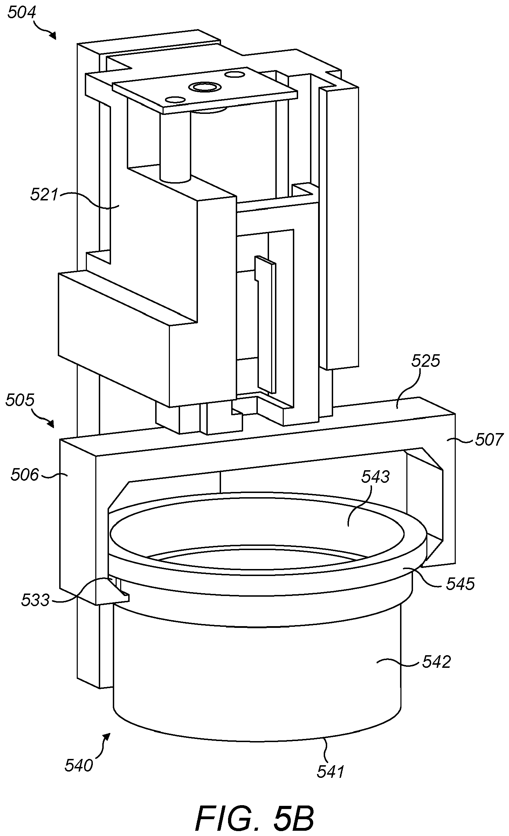

Figure 5B illustrates a partial view of a transport head 504 holding a sample holder 540. The sample holder 540 comprises a cup having a base 541, a sidewall 542 and an open end 543 for receiving a sample. The sample holder 540 further comprises a rim 545 surrounding the open end which projects outwardly from the sidewall 542. The transport head 504 comprises a main body 521 and a holding arrangement 505 which is movably mounted to the main body 521 to provide movement along the Z-axis of the sample handling apparatus in use. The holding arrangement 505 comprises a first engagement arm 506 and a second engagement arm 507, extending from base 525, which are arranged to engage opposing parts of the sample holder 540. Each of the first engagement arm 506 and the second engagement arm 507 comprises a protrusion that extends towards the other of the first/second engagement arm to define a tapered channel between the first engagement arm 506 and the second engagement arm 507. Each of the first engagement arm 506 and the second engagement arm 507 further comprises a ledge portion 533 arranged at the narrow end of the tapered channel to extend upwardly along the Z dimension. The provision of a tapered channel can help to facilitate convenient engagement of the sample holder 540 with the holding arrangement 505. The ledge portions 533 can help to provide secure holding and transport of the sample holder 540.

In some embodiments of the sample handling apparatus, the sample handling apparatus further comprises a tool for directly loading a sample to an X-ray analysis instrument (i.e., loading the sample into the X-ray analysis instrument without first loading the sample into a sample holder). For example, in some instances, the sample holder may already be loaded in the X-ray analysis instrument before the sample is loaded. Providing a sample handling apparatus that is capable of loading a sample holder (which may or may not contain a sample) into an X-ray analysis instrument and that is also capable of directly loading a sample into an X-ray analysis instrument offers the advantage of operational flexibility. It may be particularly useful to be able to directly load samples prepared as glass beads, or as pressed powders, into the X-ray analysis instrument.

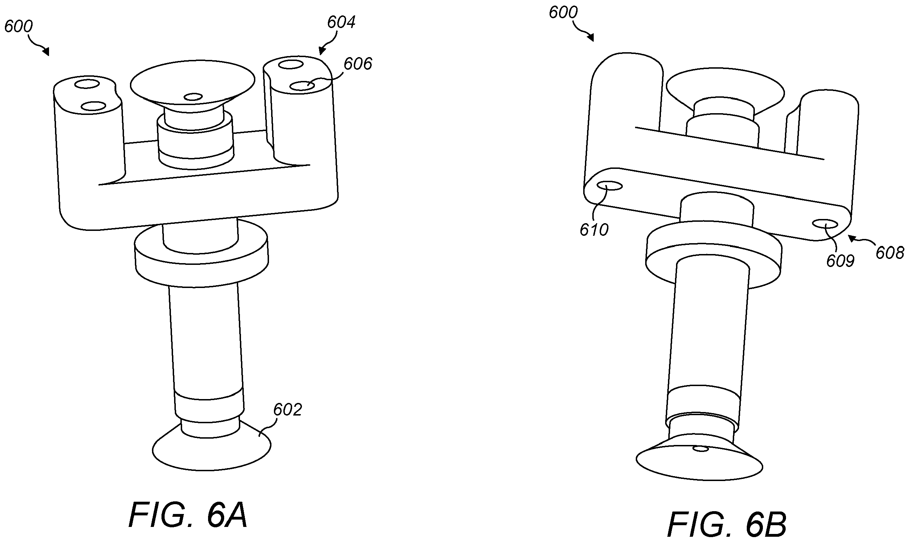

Figure 6A illustrates a perspective view of a suction tool 600 according to some embodiments of the invention. The suction tool 600 has a suction arrangement comprising a sample engaging member 602 for directly engaging a sample to hold and transport the sample. Accordingly, the suction tool 600 can be used to directly load a sample onto (or into) an X-ray analysis instrument (without the need to first insert the sample into a sample holder). In embodiments comprising the suction tool 600, the sample handling apparatus comprises a vacuum unit (not shown) configured to apply a suction force to the sample via the suction tool, in order to hold the sample. In use, the suction tool 600 is fluidly coupled to the vacuum unit such that when the vacuum unit is activated the suction tool applies a suction force to the sample via the sample engaging member 602.

The suction tool 600 further comprises a coupling arrangement 604 for removably attaching the suction tool 600 to the transport head. In some embodiments, the suction tool 600 is attached to the transport head via the holding arrangement. In other embodiments, the suction tool 600 is coupled to the transport head independently of the holding arrangement. The coupling arrangement may be configured to couple the suction tool 600 to the transport head by magnetic force. In some embodiments, the coupling arrangement comprises at least one magnetic coupling member. The magnetic coupling member 606 may comprise a permanent magnet or a magnetizable material (i.e., a ferromagnetic material).

As shown in figure 6A, in some embodiments the coupling arrangement may comprise a plurality of magnetic coupling members, which may each comprise a permanent magnet or a magnetizable material (i.e., a ferromagnetic material) such as a steel plate. The magnetic coupling arrangement may comprise a combination of both permanent magnets and a ferromagnetic materials - that is, some of the magnetic coupling members may be permanent magnets and some may comprise ferromagnetic material.

The coupling arrangement 604 facilitates convenient attachment and detachment of the suction tool 600 to the transport head. In this way, the sample handling apparatus can be used to support convenient and efficient analysis of multiple different types of sample analysis; the holding arrangement can be used to hold and transport a sample held in a sample holder (for indirect loading of a sample to an X-ray analysis instrument), while the suction tool attachment can be used to directly engage a sample and hold and transport the sample (for direct loading of the sample to the X-ray analysis instrument). In some embodiments, the sample handling apparatus comprises a dock. When the suction tool is not required, it can be detached from the transport head and stored in the dock. In some embodiments, the suction tool comprises a tool location arrangement 608 (best seen in figure 6B) comprising one or more tool location members 610 for locating the suction tool relative to the dock, and the dock comprises one or more dock location members. The tool location member and the dock location member are configured to co-operate with one another to locate the suction tool with respect to the dock. The tool location member(s) and the dock location member(s) may be magnetic - that is, it/they may comprise a permanent magnet or a magnetizable material (i.e., a ferromagnetic material) such as a steel plate. The magnetic tool location arrangement and/or the dock location members may comprise a combination of both permanent magnets and a ferromagnetic material - that is, some of the tool location members may comprise permanent magnets and some may comprise ferromagnetic material.

Figure 6B illustrates another perspective view of the suction tool 600 of figure 6A. The suction tool comprises a tool location arrangement 608 comprising a plurality of tool location members 609, 610 for locating the suction tool relative to the dock. Locating the suction tool relative to the dock helps to ensure that the suction tool is correctly oriented to facilitate proper attachment of the suction tool to the transport head. This, in turn, ensures that the vacuum functions properly and a sufficiently high suction force can be applied by the suction tool to the sample, in use. Accordingly, facilitating proper location of the suction tool in the dock can help to ensure the sample is securely held by the suction tool in use.

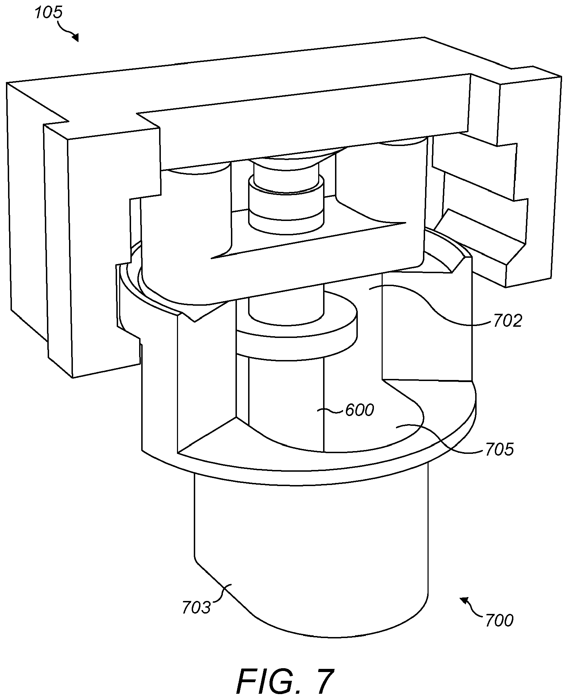

Figure 7 illustrates a dock 700 for holding the suction tool in accordance with some embodiments of the sample handling apparatus. In figure 7, the suction tool 600 is shown in a docked configuration: the suction tool is retained inside the dock 700 and positioned such that the tool location members 609, 610 co-operate with a plurality of corresponding dock location members (not shown) to locate the suction tool in the dock.

The dock may comprise a detachment member 702 for removing the suction tool from the transport head and/or the holding arrangement 105 (as shown in figure 7). The detachment member 702 is arranged to interrupt movement of the suction tool from the docked configuration to decouple to the suction tool from the transport head.

The dock shown in figure 7 comprises a body 703 having a recess 705 for receiving the suction tool. The detachment member 702 comprises a protrusion that extends outwardly from the recess. In use, when the transport head is moved away from the suction tool 600, against the detachment member 702, the suction tool 600 is decoupled from the transport head. The holding arrangement 105 may include sensors (such as those described in figure 3), which can detect the presence/absence of the suction tool 600.

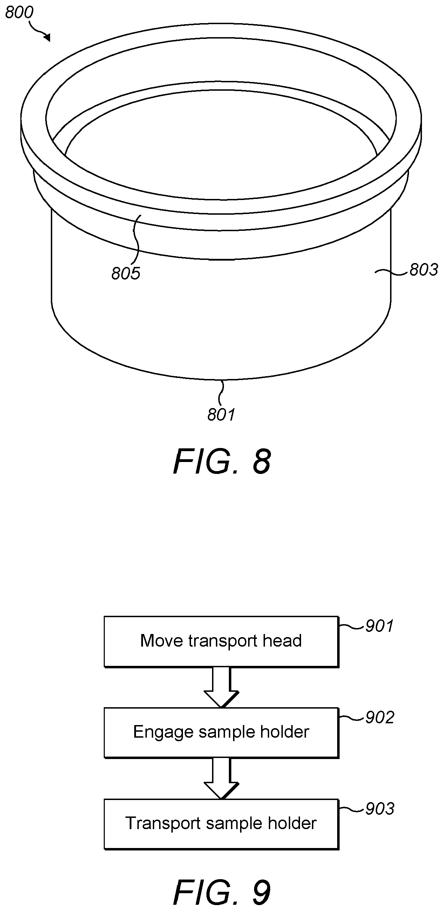

Figure 8 illustrates a sample holder 800 according to some embodiments of the invention. The sample holder is cup-shaped; it comprises a base 801 and a sidewall 803 extending around the base defining a receptacle for receiving a sample. The sample holder 800 further comprises an engagement member 805 which is shaped to engage with the holding arrangement of the transport head. In figure 8, the engagement member 805 comprises a protruding lipped portion which extends radially outwardly from the rim of an open end of the sample holder 800.

Figure 9 is a flow diagram illustrating a method of using the sample handling apparatus according to embodiments of the invention. The sample handling apparatus is initially configured with the sample holder held by a sample tray, and the transport head free of any sample holder. The transport head is moved, 901, on the frame to position the transport head with respect to the sample holder. For example, the transport head may initially be moved in the X-Y plane, and the holding arrangement lowered (along the Z-dimension) to move the first engagement arm below the engagement member of the sample holder. The transport head can then be moved in the X and/or Y dimensions to bring the first engagement arm into engagement, 903, with the engagement member of the sample holder to attach the sample holder to the first engagement arm. In this way, the transport head is brought into an engaged configuration in which the holding arrangement holds the sample holder. The transport head is then moved, 904, on the frame, with the sample holder attached to the first engagement arm. The position of the first engagement arm in the X dimension and the Y dimensions, relative to the transport head, is maintained during the steps of moving the transport head and bringing the first engagement arm into engagement with the engagement member.

In some embodiments, the sample handling apparatus comprises a first engagement arm and a second engagement arm. In these embodiments, when the holding apparatus is lowered along the Z dimension, the first engagement arm and the second engagement arm can be brought below the engagement member. The transport head can then be moved in the X and/or Y dimensions to bring the first engagement arm and the second engagement arm into engagement, 903, with the engagement member of the sample holder to attach the sample holder to the first engagement arm and the second engagement arm. Holding and transporting the sample holder between two engagement arms can help to ensure stability.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Although figure 1 shows a frame comprising support beams, it will be appreciated that the frame can have a different structure. In particular, a different number of support beams may be provided.

The holding arrangement may comprise an arch-shaped structure that is not square. In some other embodiments, the holding arrangement does not comprise an arch-shaped structure. The skilled person will appreciate that alternatively shaped structures can be provided. Further, it will be appreciated that, in some embodiments, the first and second engagement arms may not be arranged to oppose each other.

Although the sample holder is illustrated as having a substantially round cross section, it will be appreciated that the cross section may have a different shape.

The location arrangement need not be magnetic. Instead, the position of the suction tool relative to the dock could be monitored using an imaging device (e.g., a camera).

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A sample handling apparatus for transporting a sample holder, the sample handling apparatus comprising:
a sample holder having an engagement member;
a frame;
a transport head movably mounted to the frame, the transport head comprising a holding arrangement for engaging the sample holder; and
an actuator arrangement configured to move the transport head on the frame,
wherein the holding arrangement comprises a first engagement arm shaped to co-operate with the engagement member such that, in an engaged configuration, the first engagement arm holds the sample holder.

2. The sample handling apparatus of claim 1 wherein in the engaged configuration the first engagement arm and the engagement member are mechanically engaged such that the holding arrangement holds the sample holder, and the sample handling apparatus further comprises a disengaged configuration in which the first engagement arm and the engagement member are disengaged, wherein the holding arrangement is configured such that the position of the first engagement arm relative to the transport head is the same in the engaged configuration and the disengaged configuration.

3. The sample handling apparatus of claim 1 or claim 2 wherein the holding arrangement further comprises a second engagement arm shaped to co-operate with the engagement member such that, in the engaged configuration, the first engagement arm and the second engagement arm hold the sample holder.

4. The sample handling apparatus of claim 1 wherein the holding arrangement further comprises a second engagement arm for engaging the sample holder, wherein the second engagement arm is shaped to co-operate with the engagement member such that, in the engaged configuration, the first engagement arm and the second engagement arm hold the sample holder; and
the sample handling apparatus further comprises a disengaged configuration in which the first engagement arm and the second engagement arm are disengaged from the engagement member, wherein the position of the first engagement arm relative to the second engagement arm is the same in the engaged configuration and the disengaged configuration.

5. The sample handling apparatus of any of claims 2 to 4, wherein the first engagement arm and the second engagement arm are shaped to define a tapered channel for receiving the sample holder.

6. The sample handling apparatus of any of claims 3 to 5, wherein the engagement member comprises a flange and each of the first engagement arm and the second engagement arm comprises a respective projecting portion for engaging with the flange.

7. The sample handling apparatus of any preceding claim wherein the transport head is coupled to the frame such that the transport head is movable with respect to the frame along a first axis and a second axis substantially orthogonal to the first axis, and preferably wherein the holding arrangement is movable along a third axis substantially orthogonal to the first axis and the second axis.

8. The sample handling apparatus of any preceding claim further comprising a sample holder tray for holding a plurality of sample holders.

9. The sample handling apparatus of any preceding claim further comprising a suction tool for holding a sample, the suction tool comprising:
a coupling arrangement for attaching the suction tool to the transport head; and
a suction arrangement comprising a sample engaging member for applying a suction force to the sample to hold the sample.

10. The sample handling apparatus of claim 9 wherein the coupling arrangement comprises a magnetic attachment member.

11. The sample handling apparatus of claim 9 or 10 further comprising a dock for holding the suction tool, wherein the suction tool comprises a tool location member and the dock comprises a dock location member, wherein the tool location member and the dock location member are configured to co-operate with one another to locate the suction tool with respect to the dock.

12. The sample handling apparatus of claim 11 wherein the tool location member and the dock location member form a magnetic location arrangement.

13. The sample handling apparatus of claim 11 or claim 12 wherein the transport head is operable to move the suction tool, along the frame, between a docked configuration and an un-docked configuration, wherein in the docked configuration the suction tool is held by the dock; and
optionally, the dock further comprises a detachment member arranged to interrupt movement of the suction tool from the docked configuration to decouple to the suction tool from the transport head.

14. A sample handling apparatus for transporting a sample holder, the sample handling apparatus comprising:
a frame;
a transport head mounted to the frame, the transport head comprising a holding arrangement comprising a first engagement arm for engaging the sample holder and a second engagement arm for engaging the sample holder; and
an actuator arrangement configured to move the transport head on the frame,
wherein the first engagement arm and the second engagement arm are shaped to co-operate with an engagement member of the sample holder such that, in an engaged configuration, the first engagement arm and the second engagement arm hold the sample holder, the sample handling apparatus further comprising a disengaged configuration in which the first engagement arm and the second engagement arm are disengaged from the engagement member, wherein the position of the first engagement arm relative to the second engagement arm is the same in the engaged configuration and the disengaged configuration.

15. A method of using the sample handling apparatus of any preceding claim, the method comprising:
moving the transport head on the frame to position the transport head with respect to the sample holder;
bringing the first engagement arm into engagement with the engagement member, to attach the sample holder to the first engagement arm; and
moving the transport head on the frame, with the sample holder attached to the first engagement arm, wherein the position of the first engagement arm is maintained during the steps of moving the transport head and bringing the first engagement arm into engagement with the engagement member.
